# EUROPÄISCHE PATENTANMELDUNG

(11) **EP 2 910 113 A1**
(43) Veröffentlichungstag der Anmeldung: **26.08.2015**
(21) Anmeldenummer: 14401028.7
(22) Anmeldetag: 21.02.2014
(51) Int. Cl.: A01G 25/09, B60P 3/30

(54) **Gießarm für ein mobiles Anbaufahrzeug, insbesondere einen Schmalspurgeräteträger**

(71) Anmelder: Fiedler Maschinenbau und Technikvertrieb GmbH, 01877 Schmölln-Putzkau (DE)
(72) Erfinder: Fiedler, Frank, 01877 Schmölln-Putzkau (DE); Heiser, Erik, 01877 Rammenau (DE); Pallmann, Mirco, 01877 Lömischau (DE); Lehmann, Björn, 01877 Boischofswerda (DE)
(74) Vertreter: Drechsler, Gottfried

(57) **Zusammenfassung**

Ein Gießarm für ein mobiles Arbeitsfahrzeug, insbesondere für einen Schmalspur-Geräteträger, welcher an eine stirnseitige Anbaueinrichtung des Arbeitsfahrzeugs montierbar ist und endseitig eine Brause oder einen sonstigen an eine Arbeitsaufgabe angepassten Flüssigkeitsauslass trägt, ist gekennzeichnet durch: a) eine Anbauplatte (1) zum Anbau an die stirnseitige Anbaueinrichtung (38) des Arbeitsfahrzeugs (37) mit einer Aufnahmeplatte (6) für den Gießarm, b) einen an der Aufnahmeplatte (1) angelenkten, horizontal verschwenkbaren Schwenkarm (2), c) einen endseitig am Schwenkarm (2) angelenkten, vertikal verschwenkbaren Hauptarm (3), d) einen endseitig am Hauptarm (3) angelenkten, vertikal verschwenkbaren Nebenarm (4) und e) eine endseitig am Nebenarm (4) angelenkte und vertikal verschwenkbare Brause (33) oder einen sonstigen Flüssigkeitsauslass, wobei sämtliche Schwenkbewegungen über rein elektromotorische Aktoreinheiten (11, 22, 24, 29) von einer Fahrzeugkabine (39) des Arbeitsfahrzeugs (37) aus verstellbar sind.

## Beschreibung

### Technisches Gebiet

Die Erfindung betrifft einen Gießarm für ein mobiles Arbeitsfahrzeug, insbesondere für einen Schmalspur-Geräteträger, welcher an eine stirnseitige Anbaueinrichtung des Arbeitsfahrzeugs montierbar ist und endseitig eine Brause, Düse oder einen sonstigen an eine Arbeitsaufgabe angepassten Flüssigkeitsauslass trägt.

### Stand der Technik

Ein solcher gattungsbildender Gießarm ist beispielsweise aus der eine Vorrichtung zum Gießen offenbarenden DE 35 12 765 A1 bekannt. Für diese Vorrichtung ist für ein Gießen mittels eines auf einem Kraftfahrzeug angeordneten Tanks vorne an einer Konsole des Kraftfahrzeugs ein vertikaler Ständer mit einer nach oben gerichteten festen Strebe montiert, an welche ein schwenkbarer Arm mit einem Crieß- oder Sprühkopf angelenkt ist. Der Ständer und damit die Strebe sind mittels fluiddruckbetätigter Zylinder-Kolben-Aggregate um eine vertikale Achse drehbar und kippbar. Der an der Strebe um eine horizontale Achse angelenkte Arm ist durch weitere fluiddruckbetätigte Zylinder-Kolben-Aggregate verschwenkbar sowie teleskopisch ausfahrbar. Der über einen Schlauch angeschlossene Gießkopf hingegen ist elektromotorisch um die Achse des Gelenkarms drehbar. Alle Bewegungen sind vom Fahrerhaus hydraulisch steuerbar. Die Strebe und mit dieser der Arm überstreicht horizontal 90 Grad bis maximal 120 Grad.

Ein weiterer hydraulischer Gieß- und Reinigungsarm für mobile Einrichtungen ist in der DE 295 06 844 U1 beschrieben. An der frontseitigen Schnellwechseleinrichtung eines Trägerfahrzeugs ist ein Schwenkarm befestigt, der aus zwei Einzelarmen besteht und über seine Drehpunkte mittels Drehantrieben in allen möglichen Winkelzuordnungen positioniert werden kann.

Ferner offenbaren die DE 93 06 732 U1 und ihre prioritätsidentische EP 0 623 278 A1 eine fahrbare, motorbetriebene Einrichtung zur gezielten Bewässerung von im Abstand voneinander befindlichen Bäumen, Baumsträuchern, Blumenkübel usw. an befahrbaren Straßen, Wegen und Anlagen. Frontseitig vor der Fahrerkabine ist am Fahrzeug ein wasserführender vertikal und horizontal stufenlos verlängerbarer Schwenkarm über ein Drehelement angebracht, der in der Ebene um mind. 180 Grad in Fahrtrichtung verschwenkbar ist.

### Kritik am Stand der Technik

Die bekannten Gießarme werden hydraulisch betätigt und eignen sich deshalb lediglich für den Anbau an Geräteträger, welche über eine entsprechende Hydraulik verfügen. Ihr Arbeitsradius ist auf etwa 180 Grad begrenzt und die Gießarme mit ihren Verstellorganen behindern in Transportstellung direkt vor der Fahrerkabine erheblich die Sicht des Fahrers. Die hydraulischen Stellorgane erschweren ein zügiges und feinfühliges Positionieren der Brause bezüglich eines Gießobjektes.

### Darstellung der Erfindung

Der Erfindung liegt deshalb die Aufgabe zugrunde, einen Gießarm für ein Arbeitsfahrzeug zu entwickeln, der unabhängig von einer eventuell vorhandenen Arbeitshydraulik und zudem feinfühlig bedienbar ist, unkompliziert und schnell an eine Anbauplatte des beliebigen Arbeitsfahrzeugs an- und abbaubar ist, konstruktiv einfach, materialarm und damit leicht ist, korrosionsfest ist und einen außergewöhnlich großen horizontalen Schwenkbereich rund um das Fahrzeug aufweist, der es zudem auch ermöglicht, in der Transportstellung den Schwenkarm sowohl rechts als auch links seitlich am Arbeitsfahrzeug und damit für den Bediener ohne jede Sichtbehinderung festzulegen, ganz gleich, ob der Fahrersitz rechts oder links in der Fahrerkabine angeordnet ist.

Die Aufgabe wird erfindungsgemäß durch die Merkmale des Anspruchs 1 gelöst. Vorteilhafte Weiterbildungen und Varianten geben die begleitenden Ansprüche an.

### Vorteile der Erfindung

Mit der Erfindung wird ein Gießarm für Nieder- und Hochdruckanwendungen geschaffen, der sich durch rein elektrische Antriebe auszeichnet und damit autark von einer eventuell vorhandenen Hydraulik auf einem Arbeitsfahrzeug ist und sich sehr gut mittels Joysticks und Display vom Bediener handhaben lässt. Alle elektromotorischen Aktoreinheiten lassen sich gleichzeitig oder auch nacheinander verstellen. Die Elektroantriebe können aufgrund der kinematischen Besonderheiten ohne weiteres aus der Batterie des Arbeitsfahrzeugs einschließlich des Ladestroms der Lichtmaschine gespeist werden. Der horizontale Schwenkbereich über die speziellen Getriebe-Gelenk-Anordnungen reicht konstruktionsbedingt über 250 Grad, aufgeteilt auf je 125 Grad rechts/links und der Schwenkwinkel des Sprühkopfes beträgt konstruktionsbedingt nahezu 180 Grad. Der Hauptarm ist in einer vorteilhaften Ausführung bis 55 Grad kippbar und der Nebenarm um 150 Grad schwenkbar, wodurch sich ein großes raumgreifendes Arbeitsfeld erschließt. An eine üblicherweise vorhandene frontseitige, mittige Anbauvorrichtung, wie Fahrzeugplatte oder Dreipunktvorrichtung des Arbeitsfahrzeugs, beispielsweise eines Schmalspur-Geräteträgers oder Traktors, lässt sich der Schwenkarm mittels seiner Anbauplatte schnell und von nur einer Person auch ohne Hubwerk am Fahrzeug anbauen, indem der komplette Gießarm mit seinem Anfahr- und Abstellschutz auf einem dafür vorgesehenen Abstellwagen manövriert wird. Aufgrund der möglichen Schwenkbewegungen des Schwenkarms nach rechts oder links kann der Haupt- und Nebenarm gleichberechtigt auf beiden Fahrzeugseiten in einer Transportstellung festgelegt werden, wodurch die Sicht nach vom für den Fahrer nicht eingeschränkt wird, gleichgültig, ob der Fahrersitz rechts oder links in der Fahrzeugkabine angeordnet ist. Neben einem reinen Gießbetrieb im Niederdruckbereich eignet sich der Gießarm mit einem entsprechenden Flüssigkeitsauslass auch für Sprüh-, Spritz- und Reinigungsarbeiten im Hochdruckbereich. Der Gießflüssigkeit können aufgrund einer Edelstahlausführung der Rohre und Getriebebauteile auch ohne weiteres aggressive Reinigungsflüssigkeiten, Düngemittel oder Pflanzenschutzmittel zugemischt werden.

### Ausführungsbeispiel

Die Erfindung soll anhand eines Ausführungsbeispiels mittels der Figuren 1 bis 10 nachstehend näher erläutert werden. In den zugehörigen Zeichnungen, in denen identische Bauteile mit identischen Bezugszeichen versehen sind, zeigen:
- Fig. 1: einen kompletten Gießkopf in ausgefahrener Stellung in einer ersten Ansicht und
- Fig. 2: in einer weiteren Ansicht,
- Fig. 3: eine Draufsicht auf den Schwenkarm, nach links geschwenkt und
- Fig. 4: nach rechts geschwenkt, jeweils mit entferntem Haupt- und Nebenarm,
- Fig. 5: hierzu eine perspektivische Darstellung, nach rechts geschwenkt, mit entfernten Haupt- und Nebenarm,
- Fig. 6: einen am Nebenarm angebauten Sprühkopf,
- Fig. 7: frontseitig einen an ein Arbeitsfahrzeug angebauten Gießarm in Park- und Transportstellung und
- Fig. 8: in einer Arbeitsstellung,
- Fig. 9: eine Seitenansicht eines an ein Arbeitsfahrzeug angebauten Gießarm in Park- und Transportstellung und
- Fig. 10: in einer Arbeitsstellung.

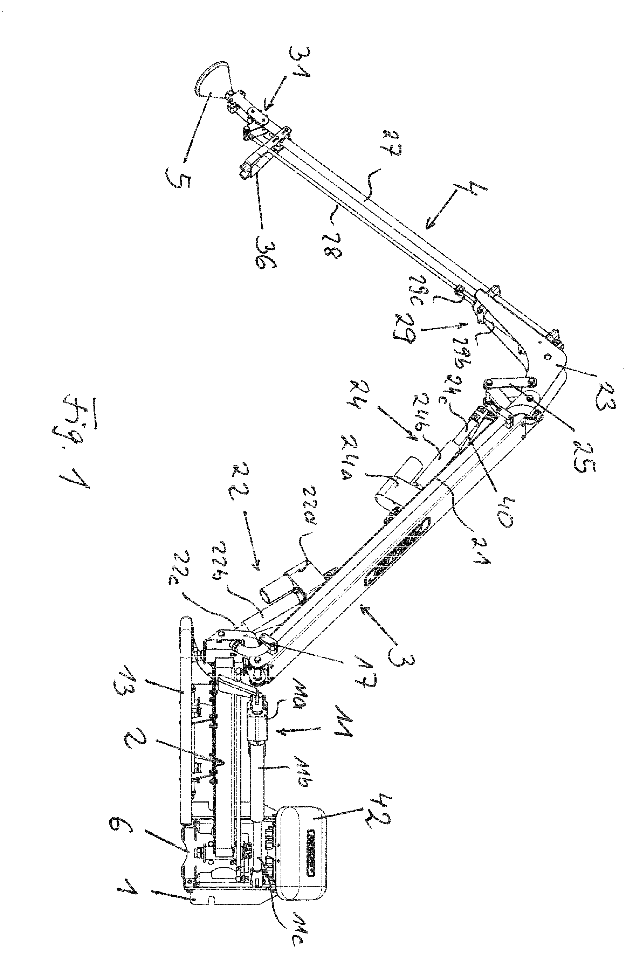

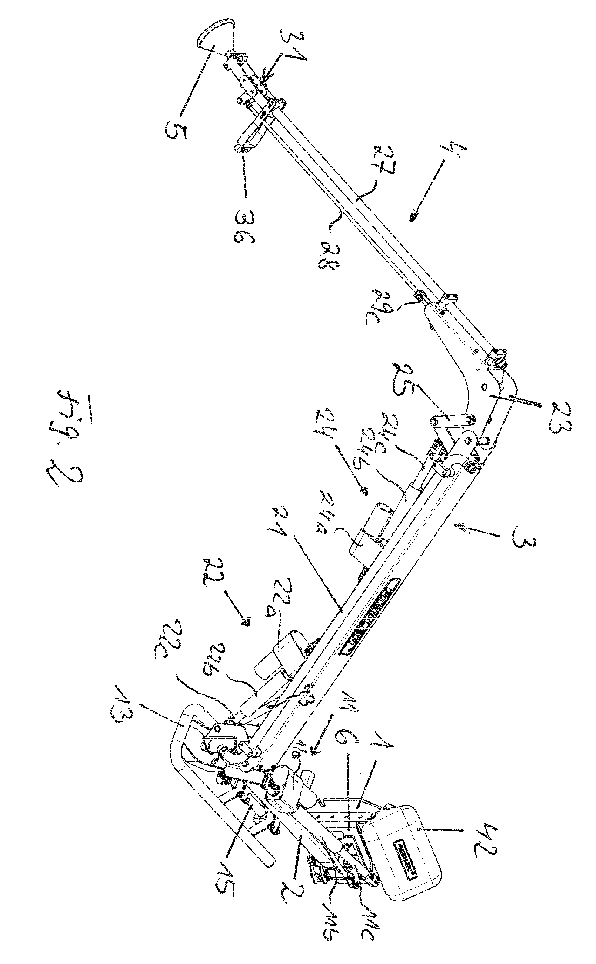

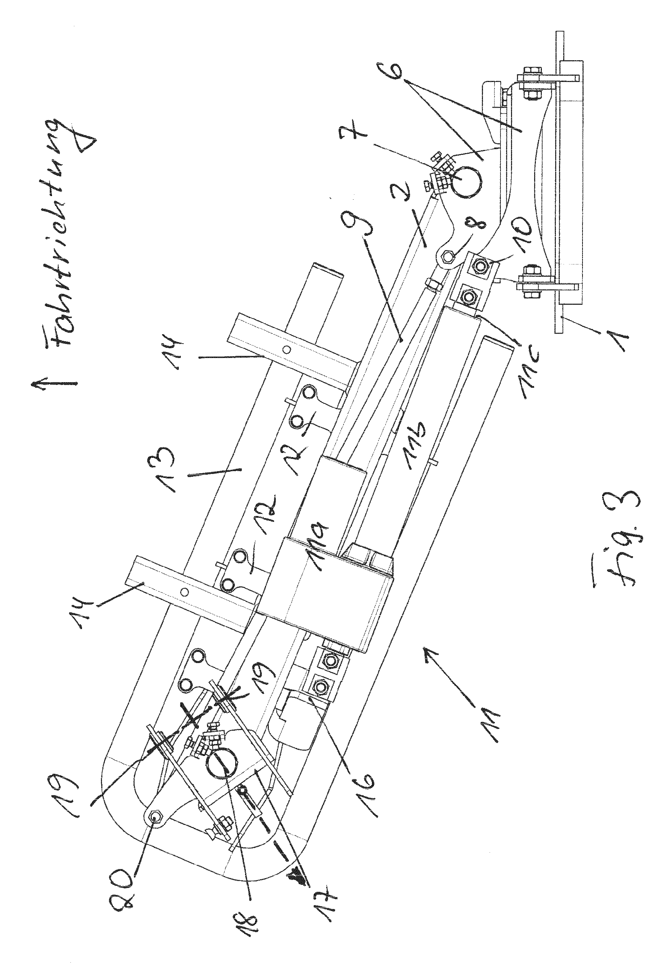

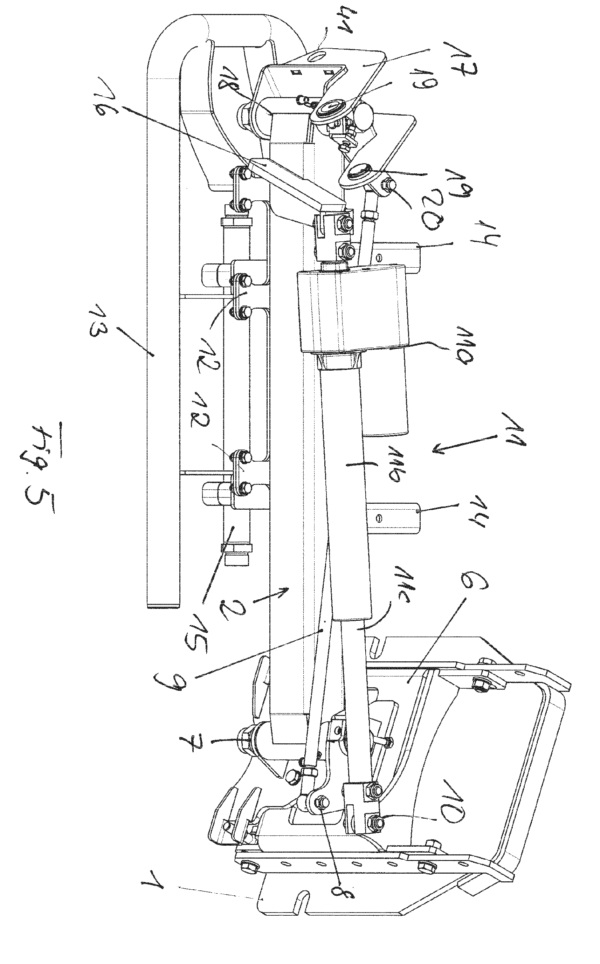

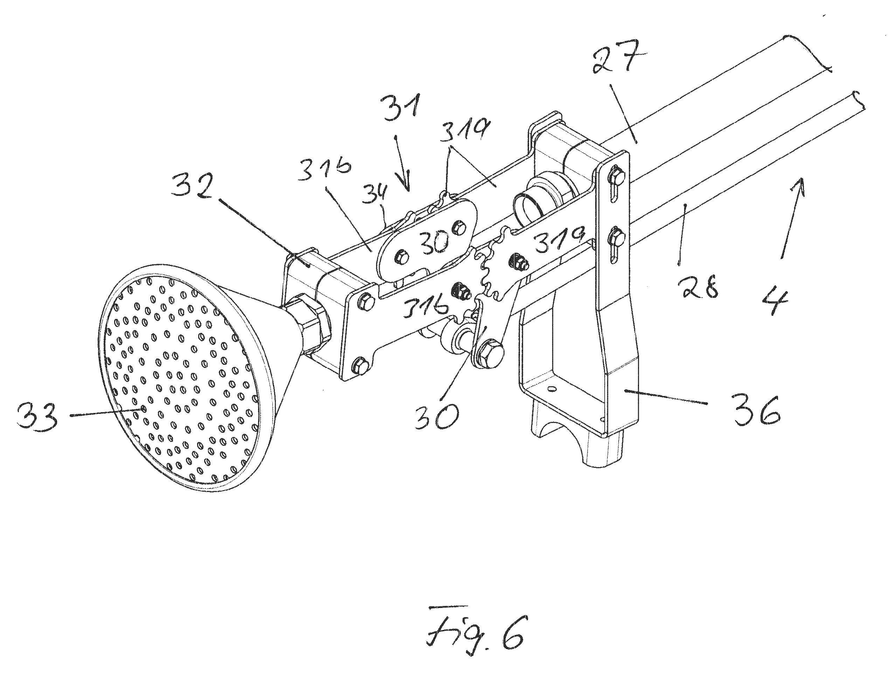

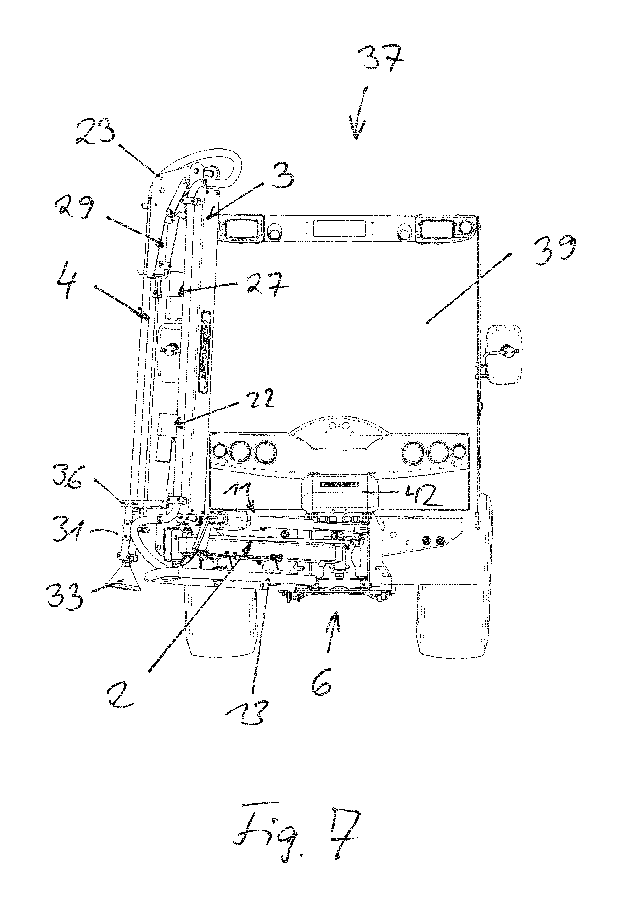

Gemäß der Figuren 1 und 2 ist ein kompletter Gießarm in einer ausgefahrenen Stellung dargestellt, wobei der Übersichtlichkeit halber die Verbindungsschläuche zum Transport einer Gießflüssigkeit zwischen den Rohrleitungen und zu einem nicht mitgeführten Tank (ebenso wie das Arbeitsfahrzeug nicht dargestellt) nicht eingezeichnet sind. Der Gießarm besteht im Wesentlichen aus einer Anbaubaugruppe, die vermittels einer Anbauplatte 1 mit einer stirnseitigen Anbauvorrichtung des Arbeitsfahrzeugs (nicht dargestellt) verschraubt ist, einer Baugruppe, betreffend einen Schwenkarm 2, einer Baugruppe, betreffend einen Hauptarm 3, einer Baugruppe, betreffend einen Nebenarm 4 und eine Baugruppe, betreffend eine Dusche 5. In den Figuren 3 bis 5 sind die Anbaubaugruppe und Schwenkarmbaugruppe nochmals herausgezeichnet und in Fig. 6 die Dusche-Baugruppe. Die Figuren 7 bis 10 zeigen den an ein Arbeitsfahrzeug 37 als Trägerfahrzeug, hier ein Schmalspur-Geräteträger, angebauten Gießarm in verschiedenen Ansichten. In der nachfolgenden Beschreibung werden insofern alle Figuren gemeinsam erläutert.

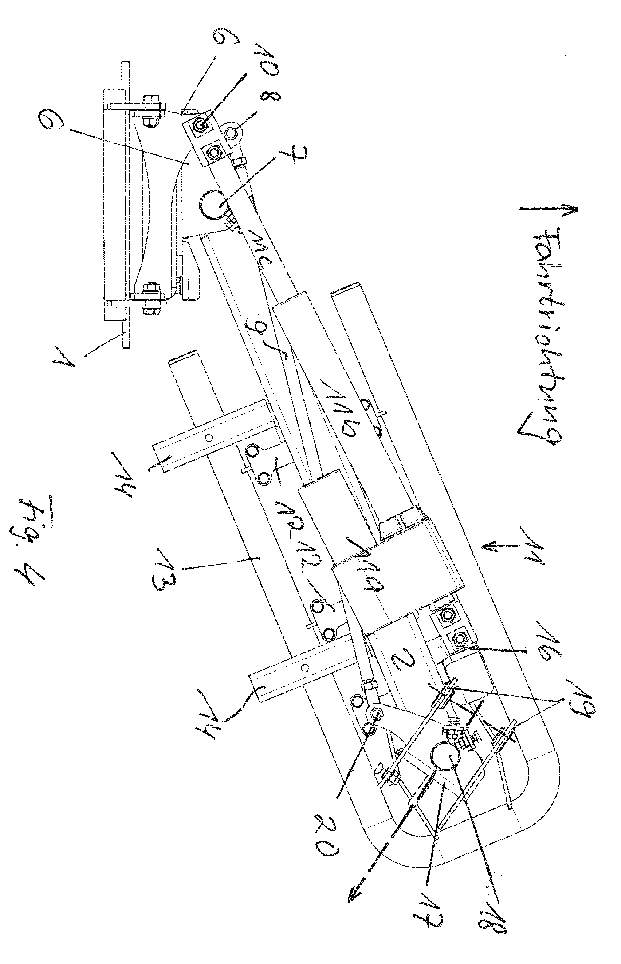

An die Anbauplatte 1 ist eine mit Abwinkelungen versehene Aufnahmeplatte 6 geschraubt. In den rechtwinkeligen Abwinkelungen liegt ein Drehlager 7 für den Schwenkarm 2, ein Drehlager 8 für eine dort angelenkte Koppelstange 9 und ein Drehlager 10 für eine erste Aktoreinheit 11. An den Schwenkarm 2 ist ein Gestell 12 geschraubt, welches bodenseitig ein U-förmig gebogenes Rohr 13 als Anfahr- und Aufstellschutz und einen Halter 14 aus zwei Stahlträgern für einen nicht gezeichneten externen Abstellwagen trägt. Außerdem trägt das Gestell 12 einen ersten Rohrleitungsabschnitt 15 für Gießwasser, an welchen beiderseits nicht dargestellte Schläuche angekuppelt sind. Der Schwenkarm 2 ist zudem noch mit einen Haltewinkel 16 ausgestattet, an dem das andere Ende der ersten Aktoreinheit 11 befestigt ist. Die erste Aktoreinheit 11 selbst besteht im Wesentlichen aus einem Getriebemotor 11a, der in einem Zylinder 11b eine Spindel antreibt, welche eine Kolbenstange 11c ausfährt und einfährt. Entsprechend lenkt der Schwenkarm 2 horizontal um sein Drehlager 7 nach rechts und links um jeweils bis zu 68 Grad aus. Im anderen Ende des Schwenkarms 2 ist eine Schwenkkonsole 17 in einem vertikalen Drehlager 18 gelagert. Die Schwenkkonsole 17 weist außerdem ein horizontales Drehlager 19 auf, in dem das innere Ende des Hauptarms 3 vertikal schwenkbeweglich gelagert ist. Die Schwenkkonsole 17 kann somit als eine Art Kreuzgelenk aufgefasst werden. Zusätzlich trägt die Schwenkkonsole 17 ein angesetztes Drehlager 20, in dem das andere Ende der Koppelstange 9 so angelenkt ist, dass sie eine Drehbewegung um das vertikale Drehlager 18 verursacht. Indem die Koppelstange 9 den Schwenkarm 2 zu beiden Endstellungen hin wechselweise kreuzt, verdreht sie beim Verschwenken des Schwenkarms 2 zusätzlich die Schwenkkonsole 17 in einem sehr großen Winkelbereich. Die Schwenkbewegung des Schwenkarms 2 wird auf einen Schwenkbereich je nach der konstruktiven Lage der Drehlager 7, 8, 10 und 20 übersetzt. Auf diese Weise kann der Hauptarm 3 bis zu 125 Grad nach rechts und bis zu 125 Grad nach links horizontal geschwenkt werden, wobei hierzu vorteilhafterweise lediglich eine erste Aktoreinheit 11 notwendig ist. Der absolute Schwenkbereich des Gießarmes beträgt somit insgesamt bis zu 250 Grad. In den Figuren 3 und 4 sind die zwei jeweiligen Endstellungen dargestellt, wobei die Pfeile in Richtung des in diesen Figuren abgenommenen Hauptarms 3 weisen.

Der Hauptarm 3 besteht aus einer starken profilierten Blechkonstruktion. An ihm montiert läuft ein zweiter Rohrleitungsabschnitt 21 der Flüssigkeitsleitung. Für die vertikale Verschwenkbarkeit des Hauptarms 2 sorgt eine zweite, zur ersten Aktoreinheit baugleiche elektromotorische Aktoreinheit 22, wiederum mit einem Getriebemotor 22a, einem Zylinder 22b und einer Kolbenstangee 22c. Die zweite Aktoreinheit 22 stützt sich über zwei Drehlager, zum einen an der Schwenkkonsole 17 über das Drehlager 41 und zum anderen am Hauptarm 3 ab. Je nach der Ausfahrweite der Kolbenstange 22b hebt oder senkt sich der Hauptarm 3. Eine parallel zur zweiten Aktoreinheit 22 angeordnete Gasdruckfederstange 43 unterstützt beim Ausfahren die Stellbewegung des Hauptarms 3 und komprimiert beim Einfahren unter Schwerkraft ihr Druckgas wieder. An das obere Ende des Hauptarms 3 ist ein Knie 23, bestehend aus einem kräftigen, entsprechend geformten Winkelblech angelenkt. Eine dritte baugleiche Aktoreinheit 24, wiederum mit einem Getriebemotor 24a, einem Zylinder 24b und einer Kolbenstange 24c, ist mit einem Ende am Hauptarm 3 angelenkt und beaufschlagt mit ihrem anderen Ende ein Koppelgetriebe 25, welches die Stellbewegung der dritten Aktoreinheit 24 über das Knie 23 auf einen am Knie 23 drehfest angesetzten Neben arm 4 überträgt. Eine parallel zur dritten Aktoreinheit 24 angeordnete Gasdruckfederstange 40 unterstützt beim Ausfahren die Stellbewegung des Nebenarms 26 und komprimiert beim Einfahren unter Schwerkraft ihr Druckgas wieder. Der Nebenarm 26 besteht im Wesentlichen aus einem ihn tragenden dritten Rohrleitungsabschnitt 27 und einer Koppelstrebe 28. Die Koppelstrebe 28 wird von einer vierten Aktoreinheit 29, aufweisend einen kleineren Getriebemotor (nicht sichtbar), einen Zylinder 29b und eine Kolbenstange 29c, translatorisch betätigt. Das andere Ende der Koppelstrebe 28 arbeitet auf ein Antriebsglied 30, mit welchem ein Zahnradgetriebe 31, bestehend aus zwei Zahnblechpaaren 31a, 31b, betätigt werden kann. Ein Zahnblechpaar 31a ist am dritten Rohrleitungsabschnitt 27 starr befestigt und das andere Zahnblechpaar 31b ist an einem Endstück 32 starr befestigt, welches einen Sprühkopf 33 trägt. Zwei Koppelgliedpaare 34 (das vordere Koppelglied ist der Übersichtlichkeit wegen nicht eingezeichnet) verbinden die Zahnblechpaare 31a, 31b so, dass bei einer Schubbewegung der Koppelstrebe 28 der Halter 32 und damit der Sprühkopf 33 vertikal ausschwenken kann. Als Sprühkopfanschluss 35 (der Übersichtlichkeit halber nicht gezeichnet) verbindet ein flexibler Schlauch den dritten Rohrleitungsabschnitt 27 mit dem Anschluss 34 des Sprühkopfes 33. Einzelheiten zum Sprühkopf 33 zeigt insbesondere die Figur 6. Am Ende des Nebenarms 26 ist außerdem eine Parksicherung 36 befestigt, mit der das Ende des Gießarms in seiner zusammengefalteten Stellung (Transport- und Parkstellung) seitlich vom Arbeitsfahrzeug vor der Fahrzeugkabine 39 ohne störende Sichtbehinderung arretiert werden kann.

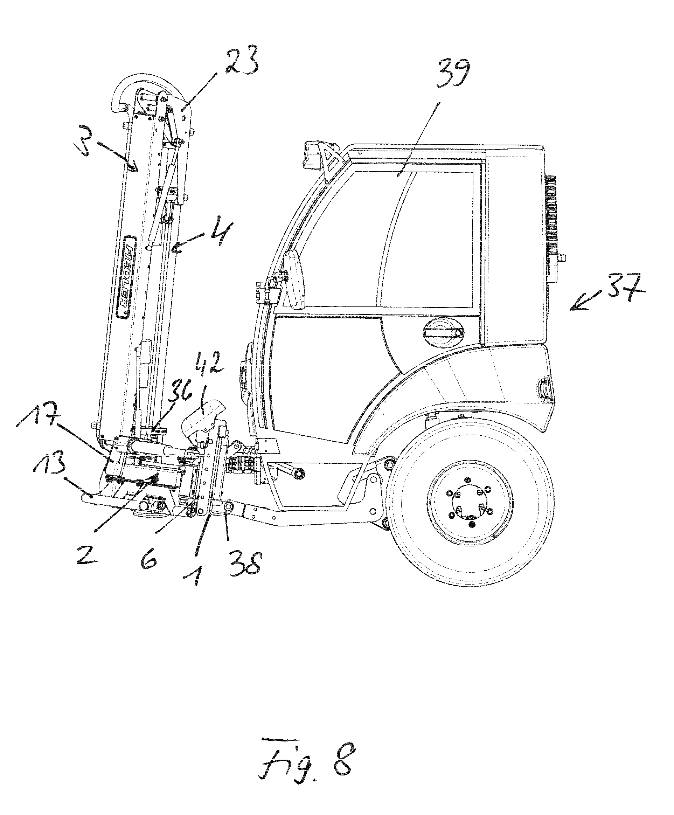

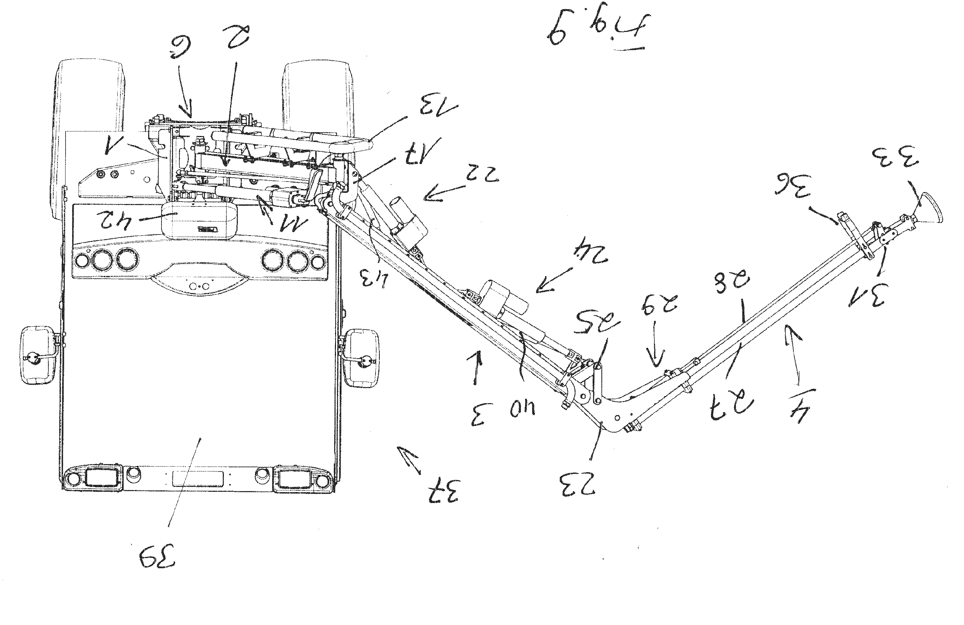

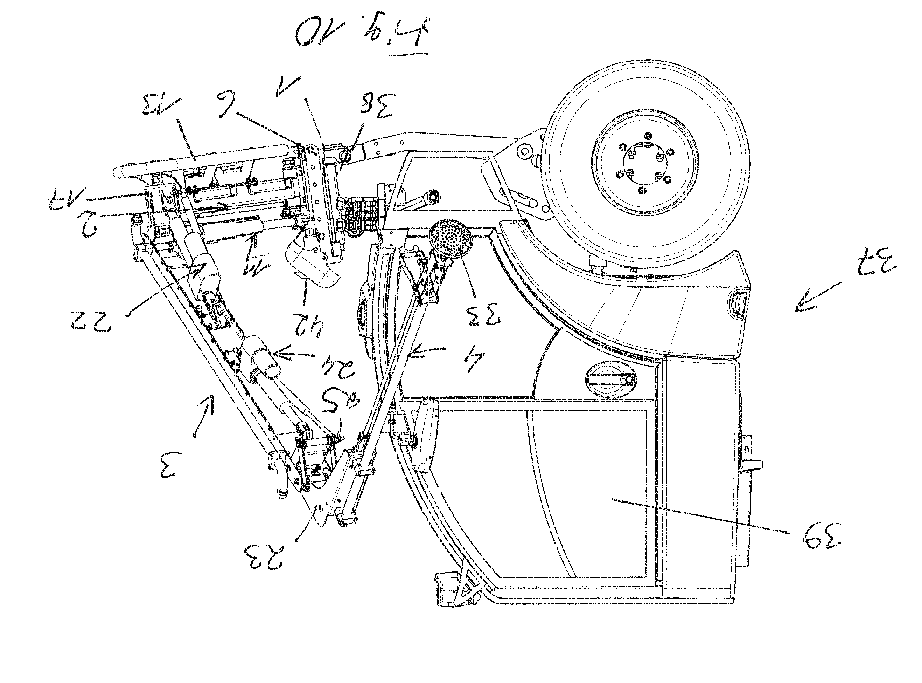

In den Figuren 7 bis 10 sind neben den bereits beschriebenen Einzelheiten zum Gießarm der Anbau an ein Arbeitsfahrzeug 37 in verschiedenen Ansichten dargestellt. Die Figuren 7 und 8 zeigen die Park- und Transportstellung des Gießarms, die Figuren 9 und 10 Arbeitsstellungen. Der Anbau erfolgt mittels der Anbauplatte 1 des Gießarms an die Anbaueinrichtung 38 des Arbeitsfahrzeugs 37. Die maximal gestreckte Auslage beträgt gemäß Ausführungsbeispiel 3,8m + den Wasserstrahl des Sprühkopfes 33, die Arbeitshöhe bis zu 4 m. In der Park- und Transportstellung hat der Gießarm nach dem Ausführungsbeispiel eine Breite von nur 1,40 m, eine Höhe von 2,10 und ein Vorbaumaß von nur 1,40 m. Oben auf der Anbauplatte 1 ist als gesondertes Bauteilkasten ein Gehäuse 42 angeordnet der die erforderlichen elektrischen Anschlüsse und die zugehörige Elektronikbauteile und steuergeräte enthält.

Von erheblichen Vorteil ist es, wenn beim Gießarm insbesondere der dritte Rohrleitungsabschnitt 27 gleichzeitig als Tragarm ausgeführt ist, d. h. der dritte Rohrleitungsabschnitt ist gegebenenfalls so verstärkt ausgebildet, dass dieser die erforderlichen Kräfte während des Schwenkens , Verfahrens und des eigentlichen Gießvorganges, sowie auch ein eventuelles anstoßen an ein Hindernis ohne Beschädigungen übersteht.

### Anwendungsgebiet der Erfindung

Vorbeschriebene Gießarme können insbesondere für das gezielte und damit wassersparende Bewässern von Straßenbäumen, Sträuchern, Blumenrabatten, Pflanztrögen, Rasenstreifen usw. unter Einmann-Bedienung vom Trägerfahrzeug aus verwendet werden. Weiterhin sind Planzendüngungen und im zulässigen Rahmen auch Schädlings-/Unkraut-bekämpfungen möglich. Neben Niederdruck-Anwendungen mit Dusch-, Sprüh- und rotierenden Waschbürstenköpfen oder auch Spitzbalken können ferner Hochdruckreinigungen von Objekten der verschiedensten Art mittels entsprechender Vorsatzdüsen vorgenommen werden. Die Speisung des Gießarmes mit Gießflüssigkeit erfolgt dabei unter Hoch- oder Niederdruck aus einem auf dem Trägerfahrzeug mitgeführten Tank. Aufgrund der Speisung der elektromotorischen Gießarmantriebe und der elektronischen Gießarmsteuerung aus der Fahrzeugbatterie lässt sich der Gießarm an die unterschiedlichsten Trägerfahrzeuge anbauen, namentlich ohne Rücksicht darauf zu nehmen, ob diese eigentlich nur für eine hydraulische Betätigung von Anbaugeräten ausgelegt sind oder nicht.

### Liste der verwendeten Bezugszeichen

- 1: Anbauplatte
- 2: Schwenkarm
- 3: Hauptarm
- 4: Nebenarm
- 5: Dusche
- 6: Aufnahmeplatte
- 7: Drehlager für Schwenkarm
- 8: Drehlager für angelenkte Koppelstange
- 9: Koppelstange
- 10: Drehlager für angelenkte Aktoreinheit.
- 11: erste Aktoreinheit
- 11a: Getriebemotor
- 11b: Zylinder
- 11c: Kolbenstange
- 12: Gestell
- 13: U-Rohr
- 14: Halter
- 15: erster Rohrleitungsabschnitt
- 16: Haltewinkel
- 17: Schwenkkonsole
- 18: Drehlager für Schwenkkonsole im Schwenkarm
- 19: Drehlager für Hauptarm 3 in Schwenkkonsole
- 20: angesetztes Drehlager für angelenkte Koppelstange
- 21: zweiter Rohrleitungsabschnitt
- 22: zweite Aktoreinheit
- 22a: Getriebemotor
- 22b: Zylinder
- 22c: Kolbenstange
- 23: Knie
- 24: dritte Aktoreinheit
- 24a: Getriebemotor
- 24b: Zylinder
- 24c: Kolbenstange
- 25: Koppelgetriebe
- 27: dritter Rohrleitungsabschnitt
- 28: Koppelstrebe
- 29: vierte Aktoreinheit
- 29b: Zylinder
- 29c: Kolbenstange
- 30: Antriebsglied
- 31: Zahnradgetriebe
- 31a: Zahnblechpaar
- 31b: Zahnblechpaar
- 32: Endstück
- 33: Sprühkopf
- 34: Koppelgliedpaar
- 35: Sprühkopfanschluss
- 36: Parksicherung
- 37: Arbeitsfahrzeug
- 38: Anbaueinrichtung am Arbeitsfahrzeug
- 39: Fahrzeugkabine
- 40: Gasdruckfederstange
- 41: Drehlager der zweiten Aktoreinheit in Schwenkkonsole
- 42: Gehäuse mit Elektrik/Elektronik
- 43: Gasdruckfederstange

## Patentansprüche

1. Gießarm für ein mobiles Arbeitsfahrzeug, insbesondere für einen Schmalspur-Geräteträger, welcher an eine stirnseitige Anbaueinrichtung des Arbeitsfahrzeugs montierbar ist und endseitig eine Brause oder einen sonstigen an eine Arbeitsaufgabe angepassten Flüssigkeitsauslass trägt,
**gekennzeichnet durch**
a) eine Anbauplatte (1) zum Anbau an die stirnseitige Anbaueinrichtung (38) des Arbeitsfahrzeugs (37) mit einer Aufnahmeplatte (6) für den Gießarm,
b) einen an der Aufnahmeplatte (6) angelenkten, horizontal verschwenkbaren Schwenkarm (2),
c) einen endseitig am Schwenkarm (2) angelenkten, vertikal verschwenkbaren Hauptarm (3),
d) einen endseitig am Hauptarm (3) angelenkten, vertikal verschwenkbaren Nebenarm (4) und
e) eine endseitig am Nebenarm (4) angelenkte und vertikal verschwenkbare Brause (33) oder einen sonstigen Flüssigkeitsauslass,
wobei sämtliche Schwenkbewegungen über rein elektromotorische Aktoreinheiten (11, 22, 24, 29) von einer Fahrzeugkabine (39) des Arbeitsfahrzeugs (37) aus verstellbar sind.

2. Gießarm nach Anspruch 1,
**dadurch gekennzeichnet,**
**dass** zum Verschwenken des Schwenkarms (2), des Hauptarms (3), des Nebenarms (4) und der Brause (33) oder einem sonstigen Flüssigkeitsauslass jeweils Aktoreinheiten (11, 22, 24, 29) aus elektrischen Getriebemotoren (11a, 22a, 24a) mit angebauten spindelbetätigten Zylinder-Kolbenstangen-Systemen (11b, 11c, 22b, 22c, 24b, 24c, 29b, 29c) dienen.

3. Gießarm nach Anspruch 2,
**dadurch gekennzeichnet,**
**dass** drei der Aktoreinheiten (11, 22, 24) jeweils auf Koppelgetriebe arbeiten,
welche die Stellbewegungen auf den Schwenkarm (2), den Hauptarm (3) und den Nebenarm (4) übertragen.

4. Gießarm nach den Ansprüchen 1 bis 3,
**dadurch gekennzeichnet,**
**dass** die Aufnahmeplatte (6) für den Schwenkarm (2) ein erstes Drehlager (7) für den horizontal verschwenkbaren Schwenkarms (2) besitzt,
ein zweites Drehlager (10), in welchem die erste Aktoreinheit (11) einerseits zum Verstellen des Schwenkarms (2) angreift und andererseits mit ihrem Festende am äußeren Ende des Schwenkarms (2) abgestützt ist, und
ein drittes Drehlager (8), das eine Koppelstange (9) aufnimmt, welche mit dem anderen Ende an einer am äußeren Ende des Schwenkarms (2) in einem Drehlager (18) angelenkte Schwenkkonsole (17) für den Hauptarm (3) über ein weiteres Drehlager (20) in der Schwenkkonsole (17) angreift,
wodurch beim Verstellen des Schwenkarms (2) zugleich die Schwenkkonsole (17) mit dem Hauptarm (17) im Sinne eines vergrößerten horizontalen Schwenkradius für den Gießarms kinematisch verstellt wird, und
wobei der Hauptarm (3) zusätzlich vertikal schwenkbar an einem dritten Drehlager (19) der Schwenkkonsole (17) angelenkt ist.

5. Gießarm nach Anspruch 4,
**dadurch gekennzeichnet,**
**dass** der Hauptarm (3) mit seinem unteren Ende in einem Drehlager (19) der Schwenkkonsole (17) angelenkt ist und
die zweite Aktoreinheit (22) mit einem Ende an einem weiteren Drehlager (41) der Schwenkkonsole (17) und mit dem anderen Ende am Hauptarm (3) befestigt ist, und
**dass** oberhalb der zweiten Aktoreinheit (22) die dritte Aktoreinheit (24) am Hauptarm (3) befestigt ist,
die über ein Koppelgetriebe (25) auf ein am Hauptarm (3) vertikal drehbeweglich angelenktes Knie (23) arbeitet,
an welchem an seinem anderen Ende drehfest das hinteren Ende des Nebenarms (4) befestigt ist.

6. Gießarm nach den Ansprüchen 1 und 2,
**dadurch gekennzeichnet,**
**dass** die vierte Aktoreinheit (29) über eine Koppelstrebe (28) und ein Zahnradgetriebe (31) die Brause (33) oder den sonstigen Flüssigkeitsauslass verschwenkt.

7. Gießarm nach Anspruch 5,
**dadurch gekennzeichnet,**
**dass** eine parallel zur zweiten und dritten Aktoreinheit (22, 24) Gasdruckfederstangen (43, 40) angeordnet sind, die beim Ausfahren die Stellbewegungen des Hauptarms (3) und des Nebenarms (4) unterstützen und beim Einfahren unter Schwerkraft ihr Druckgas wieder komprimieren.

8. Gießarm nach einem der vorstehenden Ansprüche,
**dadurch gekennzeichnet,**
**dass** eine Elektrik/Elektronik für die Aktoreinheiten (11, 22, 24, 29), von einem Gehäuse (42) geschützt, auf der Anbauplatte (1) angeordnet ist.

9. Gießarm nach einem der vorstehenden Ansprüche,
**dadurch gekennzeichnet,**
**dass** der Gießarm einen am Schwenkarm (2) befestigten Anfahr- und Abstellschutz (13) aus u-förmig gebogenem Rohr und einem Halter (14) aus Stahlträgern für einen externen Abstellwagen aufweist.

10. Gießarm nach einem der vorstehenden Ansprüche,
**dadurch gekennzeichnet,**
**dass** nahe der Brause (33) oder dem sonstigen Flüssigkeitsauslass eine Parksicherung (36) am Nebenarm (4) angebaut ist, mittels derer der Gießarm in einer Park- und Transportstellung zusammengefaltet seitlich vom Arbeitsfahrzeug (37) zu sichern ist.

11. Gießarm nach einem der vorstehenden Ansprüche,
**dadurch gekennzeichnet,**
**dass** alle flüssigkeitsführenden Rohleitungsabschnitte (15, 21, 27), die Brause (33) oder sonstige Gießflüssigkeitsauslässe sowie die Getriebebauteile in Edelstahl ausgeführt sind.

12. Gießarm nach einem der vorstehenden Ansprüche,
**dadurch gekennzeichnet,**
**dass** der 3. Rohrleitungsabschnitt (27) gleichzeitig als Tragarm ausgeführt ist.
